# EUROPEAN PATENT SPECIFICATION

(11) **EP 2 772 679 B1**
(45) Date of publication and mention of the grant of the patent: **18.11.2015**
(21) Application number: 13305230.8
(22) Date of filing: 28.02.2013
(51) Int. Cl.: F17C 13/04

(54) **A cylinder valve for pressurized gas cylinder and a gas cylinder comprising such a valve**
Zylinderventil für Druckgaszylinder und Gaszylinder mit solch einem Ventil
Soupape de cylindre pour cylindre à gaz sous pression et cylindre à gaz comprenant une telle valve

(43) Date of publication of application: 03.09.2014
(73) Proprietor: L'AIR LIQUIDE, SOCIETE ANONYME POUR L'ETUDE ET L'EXPLOITATION DES PROCEDES GEORGES CLAUDE, 75007 Paris (FR)
(72) Inventor: Arzenton, Marco, 37128 Verona (IT); Bendazzoli, Silvano, 37134 Verona (IT); Pezzo, Ivan, 37036 San Martino Buon Albergo (IT)
(74) Representative: De Cuenca, Emmanuel Jaime

(56) References cited:
- DE-A1- 3 102 261
- FR-A1- 2 505 970
- US-A- 5 520 214
- US-A1- 2003 051 755
- US-A1- 2008 110 925

## Description

The invention concerns a cylinder valve and a cylinder comprising such a valve.

The invention deals more particularly a cylinder valve comprising a body including a mounting end for attachment in the opening of a pressurized fluid cylinder, a internal withdrawing circuit comprising a first end located at the mounting end and a second end located at an outlet port located in the body, the withdrawing circuit comprising, an isolation valve and a regulating device for regulating selectively the flowrate and/or the pressure of the fluid flowing in the withdrawing circuit, the isolation valve and the regulating device being controlled by manual actuating organ(s) located on the body, the actuating organ(s) controlling the regulating device being mobile relative to the body between a first position setting a flow rate or a regulated pressure to defined minimum value and at least a second position setting a flow rate or a regulated pressure to a defined maximum value.

Some industrial or medical cylinder valves comprise a regulation device for permitting the user to adjust the pressure and/or the flow rate of the withdrawn gas.

Those regulation devices (pressure regulator and/or flow regulators) might be integrated or mounted on the cylinder valve.

Those cylinders valves include generally an isolation valve actuated by a manual actuating organ (a hand wheel or a pivoting lever for example). The regulating device is actuated manually by another actuating organ (a distinct handwheel or pivoting lever). Such a cylinder value is known from US 20030051755, considered as closest prior art.

Those cylinder valves are well adapted for application needing gas withdrawals on continuous long periods (for example several minutes or hours).

The user should thus first open the isolation valve by means of corresponding actuating organ and then actuate the actuating organ of the regulation device to the desired value.

However, some applications need only small quantities of gas delivered in successive short periods (for example few seconds every minute). This special gas needs might lead to a different use of the cylinder valve. For example some users set first the actuating organ (handwheel) controlling the pressure regulator and later open or close repeatedly the isolation valve. That is to say: the regulation device is preset by the corresponding actuating organ and remains unchanged during use (when isolation valve is open) and even after use (when isolation valve is closed).

This way of using the cylinder valve is contrary to the safety rules of the cylinder valves.

This kind of use generates fatigue and wear problems on the shut-off mechanism (especially in integrated systems).

In addition, this kind of use increases security risks because adiabatic compression or an unwanted high pressure may happen in the circuit.

Moreover, this use increases the risk of an accidental leak with and emptying of the cylinder.

One objective of the present invention is to solve at least partially one of the problems above mentioned.

To this goal, the cylinder valve according to the invention, in other respects in accordance to the generic definition given by the above preamble, is essentially **characterized in that** the cylinder valve comprises a return organ urging by default the actuating organ controlling the regulating device toward its first position, the return organ comprising a spring having a first end connected to the actuating organ controlling the regulating device and a second end connected to a fixed part of the body.

Furthermore, embodiments might include on or several of the features below:
- the isolation valve and the regulating device are separate, independent and arranged in series in the withdrawing circuit,
- the isolation valve and the regulating device are controlled by distinct and respective manual actuating organ(s) located on the body, the actuating organ controlling the isolation valve being mobile relative to the body between a position urging the opening of the isolation valve (6) and an position urging the isolation valve in its closed position,
- the isolation valve is controlled by the actuating organ controlling the regulating device, that is to say the isolation valve and the regulating device are controlled by a single and common manual actuating organ located on the body,
- the isolation valve consists in the regulating device, that is to say, the regulating device itself selectively acts as an isolation valve for selectively closing the withdrawing circuit when the actuating organ is in its first position,
- the actuating organ controlling the regulating device comprises a handwheel mounted rotating on the body,
- the return organ comprises a wire coiled spring, notably a spiral or helical shaped spring,
- the actuating organ controlling the regulating device comprises a concave portion facing the body, the return organ being housed into said concave portion,
- the actuating organ controlling the isolation valve and the actuating organ controlling the regulating device are located respectively on different faces of the body an preferably on opposite faces of the body,
- the regulating device comprises a flow rate controller for controlling and setting the flow rate of fluid into the withdrawing circuit at an adjustable level,
- in its first position, the actuating organ controlling the regulating device sets a flowrate equal to zero, that is to say the regulating device closes the withdrawing circuit,
- the regulation device comprises an adjustable pressure regulator for lowering the pressure of the withdrawn gas to a determined value,
- the actuating organ controlling the isolation valve comprises a handwheel and/or a pivoting lever,
- the withdrawing circuit comprises a residual pressure valve located between the regulation device and the isolation valve,
- the body comprises an internal filling circuit comprising a first end coming out at a filling port located on the body and a second end coming out at the mounting end of the body,
- the withdrawing circuit comprises a pressure relief valve,
- when the actuating effort on the actuating organ controlling the regulating device toward its second position is below a torque included in the range between zero and 50 Nm (in case of couple); or below a force included in the range between zero and 500 N (in case of force); the return organ moves automatically said actuating organ in its first position,

The invention may also concern a pressurized fluid cylinder comprising a cylinder valve according to any of the above or below features.

The invention may also concern any device or method comprising any combination of features below of above mentioned.

Other features and advantages will be apparent to the reading of the below description, made with reference to the drawings wherein:
- figure 1 depicts a perspective view of a possible example of cylinder valve according to the invention,
- figure 2 depicts a perspective and partially exploded view of the cylinder valve of figure 1,
- figure 3 depicts a perspective and partial view of a detail of the cylinder valve of figure 1 showing the internal structure of an actuating organ,
- figure 4 depicts schematically a possible structure of the internal circuit of the cylinder valve embodying the invention and mounted on a cylinder.
- figures 5 and 6 depict respectively face views of two different possible embodiments of the return organ of the actuating organ of the cylinder valve according to an example of the invention.

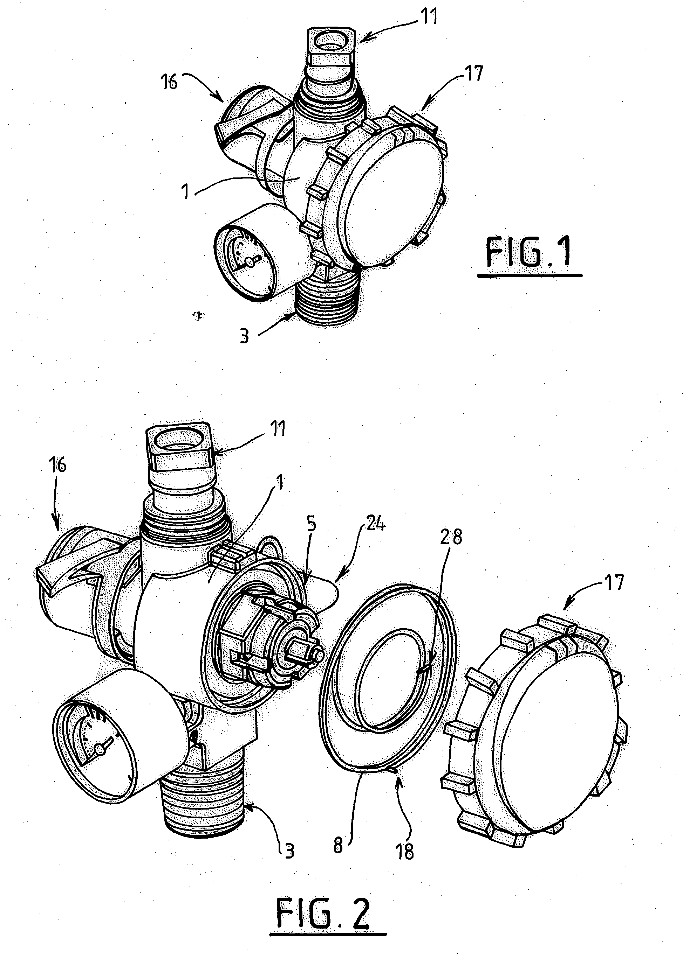

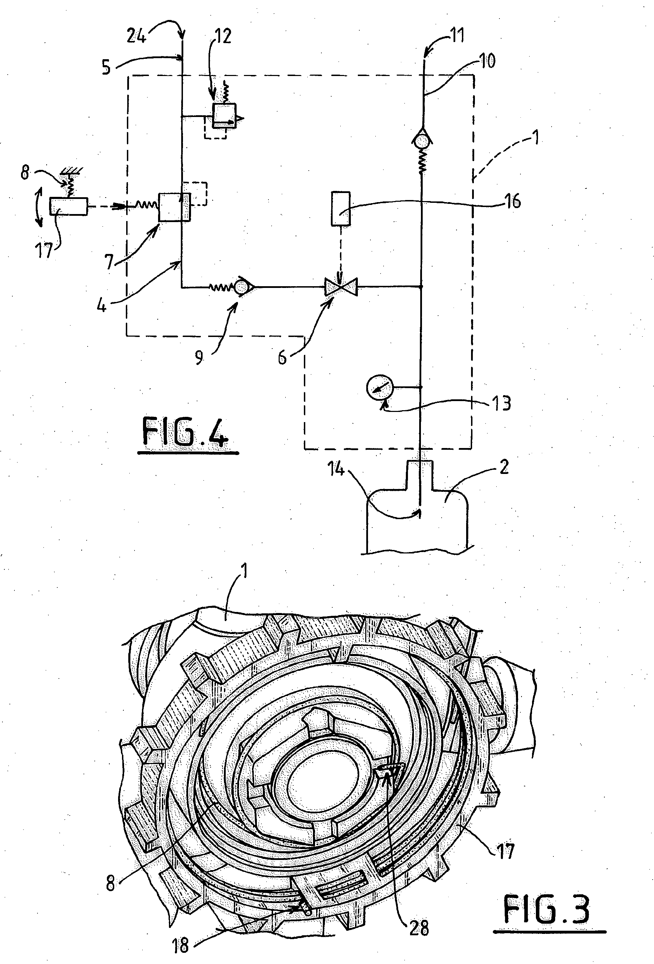

The cylinder valve shown as a non limitative example on figure 1 comprises a body 1 including a mounting end 3 (for example threaded) for mounting in a pressurized gas cylinder 2 opening (see for example figure 4).

The body 1 contains an internal withdrawing circuit 4 comprising a first end 14 located at the mounting end 3 and a second end 24 located at an outlet port 5 on the body 1.

The withdrawing circuit 4 comprises, arranged in series, an isolation valve 6 and a regulating device 7 for regulating selectively the flow rate and/or the pressure of the fluid flowing in the withdrawing circuit 4.

The regulating device 7 may include, for example, at least one among: a pressure regulator for lowering the fluid's pressure to a preset and adjustable level, a flow rate regulator for setting the fluid flow rate at a preset and adjustable value.

The isolation valve 6 and the regulating device 7 are distinct, independent and manually controlled by different and respective actuating organs 16, 17 located on the body 1. That is to say: the isolation valve 6 is controlled by its actuating organ 16 independent from the actuating organ 17 of the regulating device 7 and vice and versa.

Preferably, the actuating organs 16, 17 of the isolation valve 6 and the regulating device 7 are located respectively on different faces of the body and notably opposite faces (see figure 1).

The actuating organ 16 controlling the isolation valve 6 is mobile relative to the body 1 between a position opening said isolation valve and another position closing said isolation valve 6.

In this example, the isolation valve's 6 actuating organ 16 comprises a handweel mounted rotative on the body 1 and having a knob to be grasped by the user.

Of course, the actuating organ 16 may have a different structure, for example it may comprise a pivoting lever on the body and/or a button mobile in translation on the body 1.

The actuating organ 17 controlling the regulating device 7 is mobile relative to the body 1 between a first position setting a minimal pressure or flow rate (for example a flow rate equal to zero corresponding to a closing of the circuit 4) and a second position setting a maximal pressure flow rate (depending on the pressure in the cylinder). Preferably, between its first and second positions the actuating organ 17 sets intermediate flow rates or intermediate pressures (in a discrete or continuous way).

As disclosed on figure 1, the actuating organ 17 comprises for example a rotative handwheel. Of course, again, this actuating organ 17 controlling the regulating device 7 may comprise another structure, for example a pivoting lever or a button mobile in translation.

According to advantageous feature, the cylinder valve comprises a return organ 8 urging by default the regulating device's actuating organ 17 toward its first position.

The return organ comprises, for example, a spring having a first end 18 linked to the regulating organ's actuating organ 17 and a second end 28 linked to a fixed part of the body 1.

For example, when the actuation effort on the actuating organ 17 of the regulating organ 7 toward its second position is below:
- a torque included in the range between zero to fifty Newtonmeter (in case of couple);
- a force included in the range between zero to five hundred Newton (in case of force);
, the return organ 8 automatically moves the actuating organ 17 in its first position.

That is to say the user must keep its effort on the actuating organ 17 in order to maintain a determined command of flow rate/pressure. If not, the flow rate/pressure will be moved automatically to the minimum value set (closure of the withdrawing circuit by the regulating device 8).

This feature thus forces the user to use the cylinder valve in a correct and safe way because maintaining a flow rate/pressure needs a continuous manual action which intensity is at least equal to the taring force of the return organ 8.

This generates the following advantages:
- lowering the risk of bad use as described above,
- leak risks lowering,
- a better control ergonomic for the user,
- improvement of the safety due to: a longer transient phase to achieve the outlet working pressure and flow, and an opening of the actuating organ 16 with the actuating organ 17 closed.

In addition, this maintained effort of the user on the actuating organ 17 in order to get a gas flow rate and its automatic closure in case of stop increases the security of the use of the gas, especially in case of urgency or accident.

As illustrated on figures 2, 3, 5 and 6, the return organ 8 comprises for example a wired coiled spring, notably of spiral or helical type. Of course, every other type of spring arrangement is possible (traction spring, compression spring, leaf spring...) in order to carry out this function of urging this actuating organ 17 toward its first position.

As shown on figure 3 (where actuating organ 17 is shown open in its central part), the actuating organ 17 comprises a concave portion facing the body 1 and the return organ is housed into this concave portion.

The extremities 18, 28 of the return organ 8 are for example located in slits or against abutments on the body and on the actuating organ 7.

As illustrated on figure 4 as non limitative example, the withdrawing circuit can include a residual pressure valve 9 located between the isolation valve 6 and the regulating device 7.

The withdrawing circuit 4 can include also a gauge 13 and a pressure relief valve 12 in case of failure (overpressure, overheating).

The body 1 comprises preferably also an internal filling circuit 10 having a first end located in a filling port 11 and a second end located at the mounting end 3.

Of course, the invention is not limited to the example described with references to figures 1 to 6.

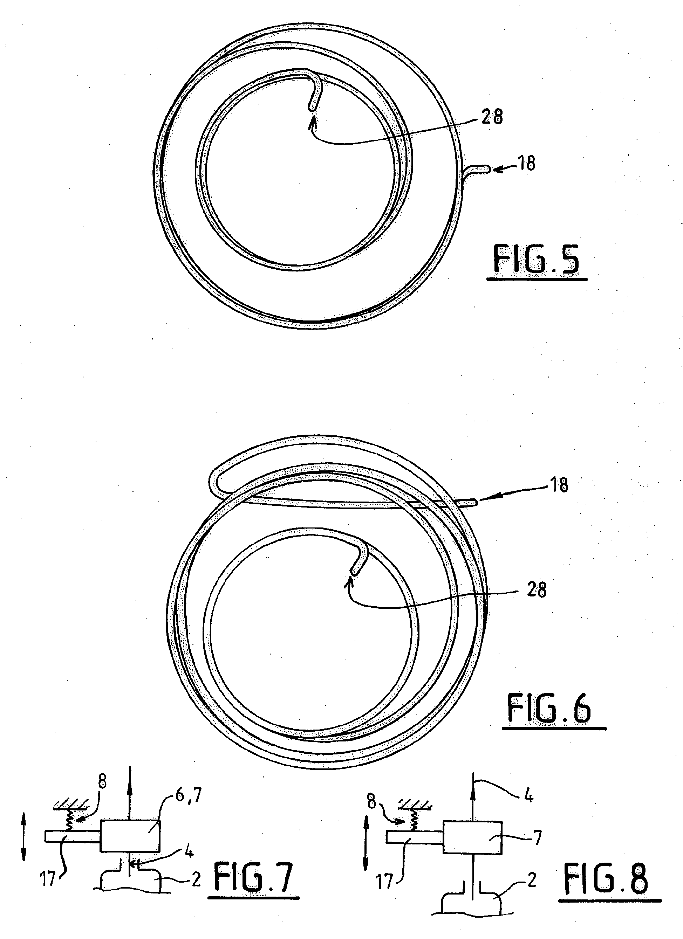

For example, in another embodiment illustrated at figure 7, the isolation valve 6 and the regulating device 7 (which are separate entities) are controlled by a single and common actuating organ 17 which is the actuating organ 17 controlling regulating device 7 (urged by the return organ 8). For example, the single actuating organ 17 controlling both the isolation valve 6 and the regulating device 7 closes the isolation valve 6 in its first position (or in another special position) and opens the isolation valve 6 in the other positions corresponding to regulated pressures or flows not null. The actuating organ 17 may also be mobile according to different movements and the opening/closing of the isolation valve 6 may be controlled by a movement different from the movement controlling the regulating device 7 (for example translation versus a rotation).

In a further embodiment illustrated at figure 8, there is no separate isolation valve. That is to say the isolation valve function (closing/opening the circuit 4) is performed by the regulating device 7 itself and controlled by the actuating organ 17. This means that the regulating 7 device comprises a pressure/flow regulator valve which is used also as an isolation valve. As explained earlier, the actuating organ 17 may also be mobile according to different movements and the opening/closing of circuit function may be controlled by a movement different from the movement controlling the regulating device 7 (for example translation versus rotation). Alternatively, the closing of the circuit 4 is performed when the actuating organ 17 is in its first position.

## Claims

1. A cylinder valve comprising a body (1) including a mounting end (3) for attachment in the opening of a pressurized fluid cylinder (2), a internal withdrawing circuit (4) comprising a first end (14) located at the mounting end (3) and a second end (24) located at an outlet port (5) located in the body (1), the withdrawing circuit (4) comprising, an isolation valve and a regulating device (7) for regulating selectively the flowrate and/or the pressure of the fluid flowing in the withdrawing circuit (4), the isolation valve and the regulating device (7) being controlled by manual actuating organ(s) (16, 17) located on the body (1), the actuating organ(s) (17) controlling the regulating device (7) being mobile relative to the body (1) between a first position setting a flow rate or a regulated pressure to defined minimum value and at least a second position setting a flow rate or a regulated pressure to a defined maximum value, **characterized in that** the cylinder valve comprises a return organ (8) urging by default the actuating organ (17) controlling the regulating device (7) toward its first position, the return organ (8) comprising a spring having a first end (18) connected to the actuating organ (17) controlling the regulating device (7) and a second end connected to a fixed part of the body (1).

2. A cylinder valve according to claim 1, wherein the isolation valve (6) and the regulating device (7) are separate, independent and arranged in series in the withdrawing circuit (4).

3. A cylinder valve according to claim 2, wherein the isolation valve (6) and the regulating device (7) are controlled by distinct and respective manual actuating organ(s) (16, 17) located on the body (1), the actuating organ (16) controlling the isolation valve (6) being mobile relative to the body between a position urging the opening of the isolation valve (6) and an position urging the isolation valve (6) in its closed position.

4. A cylinder valve according to claim 1 or 2, wherein the isolation valve is controlled by the actuating organ (17) controlling the regulating device (7), that is to say the isolation valve (6) and the regulating device (7) are controlled by a single and common manual actuating organ (17) located on the body (1).

5. A cylinder valve according to claim 1, wherein the isolation valve consists in the regulating device (7), that is to say, the regulating device (7) itself selectively acts as an isolation valve for selectively closing the withdrawing circuit (4) when the actuating organ (17) is in its first position.

6. A cylinder valve according to any of claims 1 to 5, wherein the actuating organ (17) controlling the regulating device (7) comprises a handwheel mounted rotating on the body (1).

7. A cylinder valve according to any of claims 1 to 6, wherein the return organ (8) comprises a wire coiled spring, notably a spiral or helical shaped spring.

8. A cylinder valve according to any of claims 1 to 7, wherein the actuating organ (17) controlling the regulating device (7) comprises a concave portion facing the body (1), the return organ (8) being housed into said concave portion.

9. A cylinder valve according to claim 3, wherein the actuating organ (16) controlling the isolation valve (6) and the actuating organ (17) controlling the regulating device (7) are located respectively on different faces of the body (1) an preferably on opposite faces of the body (1).

10. A cylinder valve according to any of claims 1 to 9, wherein the regulating device (7) comprises a flow rate controller for controlling and setting the flow rate of fluid into the withdrawing circuit (4) at an adjustable level.

11. A cylinder valve according to any of claims 1 to 10, wherein, in its first position, the actuating organ (17) controlling the regulating device (7) sets a flowrate equal to zero, that is to say the regulating device (7) closes the withdrawing circuit (4).

12. A cylinder valve according to any of claims 1 to 11, wherein, the regulation device (7) comprises an adjustable pressure regulator for lowering the pressure of the withdrawn gas to a determined value.

13. A cylinder valve according to any of claims 3 or 9, wherein the actuating organ (16) controlling the isolation valve (6) comprises a handwheel and/or a pivoting lever.

14. A cylinder valve according to any of claims 1 to 13 wherein when the actuating effort on the actuating organ controlling the regulating device toward its second position is below a torque included in the range between zero and 50 Nm (in case of couple) ; or below a force included in the range between zero and 500 N (in case of force) ; the return organ moves automatically said actuating organ in its first position.

15. Pressurized fluid cylinder comprising a cylinder valve according to any of claims 1 to 14.

## Patentansprüche

1. Zylinderventil, umfassend einen Körper (1) mit einem Befestigungsende (3) zum Anbringen in der Öffnung eines Fluiddruckzylinders (2), einen internen Ausscheidungskreis (4) mit einem ersten Ende (14), angeordnet am Befestigungsende (3), und einem zweiten Ende (24), angeordnet an eine Auslassöffnung (5), angeordnet im Körper (1), wobei der Ausscheidungskreis (4) Folgendes umfasst: ein Isolationsventil und eine Einstellvorrichtung (7) zum selektiven Einstellen der Strömungsrate und/oder des Drucks des Fluids, das im Ausscheidungskreis (4) strömt, wobei das Isolationsventil und die Einstellvorrichtung (7) von manuellen Betätigungsorganen (16, 17) gesteuert werden, die am Körper (1) angeordnet sind, wobei die Betätigungsorgane (17), die die Einstellvorrichtung (7) steuern, bezogen auf den Körper (1) zwischen einer ersten Position, die eine Strömungsrate oder einen eingestellten Druck auf einen definierten Mindestwert einstellt, und wenigstens einer zweiten Position, die eine Strömungsrate oder einen eingestellten Druck auf einen definierten Höchstwert einstellt, bewegbar ist, **dadurch gekennzeichnet, dass** das Zylinderventil ein Rückstellorgan (8) umfasst, das standardmäßig das Betätigungsorgan (17), welches die Einstellvorrichtung (7) steuert, zu dessen erster Position hin drängt, wobei das Rückstellorgan (8) eine Feder aufweist, die ein erstes Ende (18), welches mit dem Betätigungsorgan (17) verbunden ist, das die Einstellvorrichtung (7) steuert, und ein zweites Ende, das mit einem feststehenden Teil des Körpers (1) verbunden ist, hat.

2. Zylinderventil nach Anspruch 1, wobei das Isolationsventil (6) und die Einstellvorrichtung (7) separat, unabhängig und in Reihe im Ausscheidungskreis (4) angeordnet sind.

3. Zylinderventil nach Anspruch 2, wobei das Isolationsventil (6) und die Einstellvorrichtung (7) durch separate und jeweilige manuelle Betätigungsorgane (16, 17) gesteuert werden, die auf dem Körper (1) gelagert sind, wobei das Betätigungsorgan (16), das das Isolationsventil (6) steuert, bezogen auf den Körper zwischen einer Position, in der es zu einem Öffnen des Isolationsventils (6) hin drängt, und einer Position, in der er es das Isolationsventil (6) in seine geschlossene Position drängt, bewegbar ist.

4. Zylinderventil nach Anspruch 1 oder 2, wobei das Isolationsventil vom Betätigungsorgan (17) gesteuert wird, das die Einstellvorrichtung (7) steuert, das Isolationsventil (6) und die Einstellvorrichtung (7) werden also über ein einziges und gemeinsames manuelles Betätigungsorgan (17) gesteuert, welches auf dem Körper (1) angeordnet ist.

5. Zylinderventil nach Anspruch 1, wobei das Isolationsventil aus der Einstellvorrichtung (7) besteht, die Einstellvorrichtung (7) selbst wirkt also selektiv als ein Isolationsventil zum selektiven Schließen des Ausscheidungskreises (4), wenn sich das Betätigungsorgan (17) in seiner ersten Position befindet.

6. Zylinderventil nach einem der Ansprüche 1 bis 5, wobei das Betätigungsorgan (17), das die Einstellvorrichtung (7) steuert, ein auf dem Körper (1) angebrachtes Handrad umfasst, das rotiert.

7. Zylinderventil nach einem der Ansprüche 1 bis 6, wobei das Rückstellorgan (8) eine Draht-Wickelfeder umfasst, insbesondere eine spiralförmige oder schraubenförmige Feder.

8. Zylinderventil nach einem der Ansprüche 1 bis 7, wobei das Betätigungsorgan (17), das die Einstellvorrichtung (7) steuert, einen konkaven Abschnitt umfasst, der zum Körper (1) hin weist, wobei das Rückstellorgan (8) in dem konkaven Abschnitt gelagert ist.

9. Zylinderventil nach Anspruch 3, wobei das Betätigungsorgan (16), das das Isolationsventil (6) steuert und das Betätigungsorgan (17), das die Einstellvorrichtung (7) steuert, jeweils auf unterschiedlichen Flächen des Körpers (1) und vorzugsweise auf einander gegenüberliegenden Flächen des Körpers (1) angeordnet sind.

10. Zylinderventil nach einem der Ansprüche 1 bis 9, wobei die Einstellvorrichtung (7) eine Strömungsraten-Steuervorrichtung umfasst, um die Strömungsrate von Fluid im Ausscheidungskreis (4) zu steuern und auf einen einstellbaren Wert einzustellen.

11. Zylinderventil nach einem der Ansprüche 1 bis 10, wobei das Betätigungsorgan (17), das die Einstellvorrichtung (7) steuert, in seiner ersten Position eine Strömungsrate gleich null einstellt, die Einstellvorrichtung (7) schließt also den Ausscheidungskreis (4).

12. Zylinderventil nach einem der Ansprüche 1 bis 11, wobei die Einstellvorrichtung (7) einen einstellbaren Druckregler zum Senken des Drucks des entnommenen Gases auf einen bestimmten Wert umfasst.

13. Zylinderventil nach einem der Ansprüche 3 oder 9, wobei das Betätigungsorgan (16), das das Isolationsventil (6) steuert, ein Handrad und/oder einen Schwenkhebel umfasst.

14. Zylinderventil nach einem der Ansprüche 1 bis 13, wobei der Betätigungsaufwand am Betätigungsorgan, das die Einstellvorrichtung steuert, zu seiner zweiten Position hin unter einem Moment liegt, das im Bereich zwischen null und 50 Nm liegt (im Falle eines Kräftepaars); oder unter einer Kraft liegt, die im Bereich zwischen null und 500 N liegt (im Falle einer Kraft); das Rückstellorgan bewegt das Betätigungsorgan automatisch in dessen erste Position.

15. Fluiddruckzylinder, umfassend ein Zylinderventil nach einem der Ansprüche 1 bis 14.

## Revendications

1. Robinet de bouteille comprenant un corps (1) incluant une extrémité de montage (3) destinée à être fixée dans l'ouverture d'une bouteille de fluide sous pression (2), un circuit de soutirage interne (4) comprenant une première extrémité (14) située au niveau de l'extrémité de montage (3) et une seconde extrémité (24) située au niveau d'un orifice de refoulement (5) situé dans le corps (1), le circuit de soutirage (4) comprenant un robinet d'isolement et un dispositif de régulation (7) destinés à réguler sélectivement le débit et/ou la pression du fluide circulant dans le circuit de soutirage (4), le robinet d'isolement et le dispositif de régulation (7) étant commandés par un ou des organes à actionnement manuel (16, 17) situés sur le corps (1), le ou les organes d'actionnement (17) commandant le dispositif de régulation (7) étant mobiles par rapport au corps (1) entre une première position établissant un débit ou une pression régulée à une valeur minimale définie et au moins une seconde position établissant un débit ou une pression régulée à une valeur maximale définie, **caractérisé en ce que** le robinet de bouteille comprend un organe de retour (8) poussant par défaut l'organe d'actionnement (17) commandant le dispositif de régulation (7) vers sa première position, l'organe de retour (8) comprenant un ressort ayant une première extrémité (18) raccordée à l'organe d'actionnement (17) commandant le dispositif de régulation (7) et une seconde extrémité raccordée à une partie fixe du corps (1).

2. Robinet de bouteille selon la revendication 1, dans lequel le robinet d'isolement (6) et le dispositif de régulation (7) sont séparés, indépendants et agencés en série dans le circuit de soutirage (4).

3. Robinet de bouteille selon la revendication 2, dans lequel le robinet d'isolement (6) et le dispositif de régulation (7) sont commandés par un ou des organes d'actionnement manuel distincts et respectifs (16, 17) situés sur le corps (1), l'organe d'actionnement (16) commandant le robinet d'isolement (6) étant mobile par rapport au corps entre une position poussant l'ouverture du robinet d'isolement (6) et une position poussant le robinet d'isolement (6) dans sa position fermée.

4. Robinet de bouteille selon la revendication 1 ou 2, dans lequel le robinet d'isolement est commandé par l'organe d'actionnement (17) commandant le dispositif de régulation (7), c'est-à-dire que le robinet d'isolement (6) et le dispositif de régulation (7) sont commandés par un organe d'actionnement manuel unique et commun (17) situé sur le corps (1).

5. Robinet de bouteille selon la revendication 1, dans lequel le robinet d'isolement consiste en le dispositif de régulation (7), c'est-à-dire que le dispositif de régulation (7) sert lui-même sélectivement de robinet d'isolement pour fermer sélectivement le circuit de soutirage (4) lorsque l'organe d'actionnement (17) est dans sa première position.

6. Robinet de bouteille selon l'une quelconque des revendications 1 à 5, dans lequel l'organe d'actionnement (17) commandant le dispositif de régulation (7) comprend un volant de commande manuelle monté rotatif sur le corps (1).

7. Robinet de bouteille selon l'une quelconque des revendications 1 à 6, dans lequel l'organe de retour (8) comprend un ressort de fil spiralé, en particulier un ressort en forme de spirale ou de forme hélicoïdale.

8. Robinet de bouteille selon l'une quelconque des revendications 1 à 7, dans lequel l'organe d'actionnement (17) commandant le dispositif de régulation (7) comprend une partie concave faisant face au corps (1), l'organe de retour (8) étant logé dans ladite partie concave.

9. Robinet de bouteille selon la revendication 3, dans lequel l'organe d'actionnement (16) commandant le robinet d'isolement (6) et l'organe d'actionnement (17) commandant le dispositif de régulation (7) sont situés respectivement sur différentes faces du corps (1) et de préférence sur des faces opposées du corps (1).

10. Robinet de bouteille selon l'une quelconque des revendications 1 à 9, dans lequel le dispositif de régulation (7) comprend une unité de commande de débit destinée à commander et établir le débit de fluide dans le circuit de soutirage (4) à un niveau réglable.

11. Robinet de bouteille selon l'une quelconque des revendications 1 à 10, dans lequel, dans sa première position, l'organe d'actionnement (17) commandant le dispositif de régulation (7) établit un débit égal à zéro, c'est-à-dire que le dispositif de régulation (7) ferme le circuit de soutirage (4).

12. Robinet de bouteille selon l'une quelconque des revendications 1 à 11, dans lequel le dispositif de régulation (7) comprend un régulateur de pression réglable destiné à abaisser la pression du gaz soutiré à une valeur déterminée.

13. Robinet de bouteille selon l'une quelconque des revendications 3 ou 9, dans lequel l'organe d'actionnement (16) commandant le robinet d'isolement (6) comprend un volant à commande manuelle et/ou un levier pivotant.

14. Robinet de bouteille selon l'une quelconque des revendications 1 à 13, dans lequel lorsque l'effort d'actionnement sur l'organe d'actionnement commandant le dispositif de régulation vers sa seconde position est inférieur à un couple inclus dans la plage entre zéro et 50 Nm (en cas de couple) ; ou inférieure à une force incluse dans la plage entre zéro et 500 N (en cas de force) ; l'organe de retour déplace automatiquement ledit organe d'actionnement dans sa première position.

15. Bouteille de fluide sous pression comprenant un robinet de bouteille selon l'une quelconque des revendications 1 à 14.
